# EUROPÄISCHE PATENTSCHRIFT

(11) **EP 2 682 777 B1**
(45) Veröffentlichungstag und Bekanntmachung des Hinweises auf die Patenterteilung: **15.05.2019**
(21) Anmeldenummer: 12005946.4
(22) Anmeldetag: 18.08.2012
(51) Int. Cl.: G01S 3/784, G01S 7/48, G01S 7/486

(54) **Verfahren zur Detektion von gepulster Laserstrahlung sowie bildgebender Laserwarner**
Method for detecting pulsed laser radiation and imaging laser detector
Procédé de détection d'un rayonnement laser pulsé ainsi qu'avertisseur laser imagé

(30) Priorität: 07.07.2012 EP 12005053
(43) Veröffentlichungstag der Anmeldung: 08.01.2014
(73) Patentinhaber: HENSOLDT Sensors GmbH, 82024 Taufkirchen (DE)
(72) Erfinder: Scherbarth, Stefan, Dr., 88677 Markdorf (DE); Rudow, Oliver, Dr., 80634 München (DE)
(74) Vertreter: LifeTech IP Spies & Behrndt Patentanwälte PartG mbB

(56) Entgegenhaltungen:
- DE-A1-102007 024 051
- DE-C1- 19 621 195
- GB-A- 2 122 833
- US-A- 6 137 566
- US-B1- 7 397 019
- M. LEHMANN: "Smart pixels for future 3D-TOF sensors", WORKSHOP ON CHARGE-COUPLED DEVICES AND ADVANCED IMAGE SENSORS, [Online] 10. Juni 2005 (2005-06-10), Seiten 193-196, XP055049652, Gefunden im Internet: URL:http://www.imagesensors.org/Past%20Wor kshops/2005%20Workshop/2005%20Papers/49%20 Lehmann%20et%20al.pdf> [gefunden am 2013-01-15]

## Beschreibung

Die Erfindung betrifft ein Verfahren zur Detektion von gepulster Laserstrahlung sowie einen dieses Verfahren implementierenden bildgebenden Laserwarner. Das Verfahren und der entsprechende Laserwarner dienen zur Detektion und zweidimensionalen Richtungsbestimmung einfallender, gepulster Laserstrahlung, insbesondere solcher mit geringer Intensität, die zum Beispiel von Lenklasern in lasergesteuerten Lenkflugkörpern (Beamrider-Lenkflugkörper) verursacht werden kann.

Beamrider-Lenkflugkörper stellen eine hohe militärische Bedrohung dar. Sie können prinzipiell an Hand des Lenklasers frühzeitig detektiert werden. Dies wird jedoch auf Grund der sehr geringen am Target eintreffenden Laserpulsenergie in der Größenordnung von einigen fJ/cm² sehr erschwert, welche zumindest tagsüber häufig völlig von der Umgebungshelligkeit überdeckt wird. Neben der frühzeitigen Detektion ist auch die möglichst auf ca. ein Grad genaue Bestimmung der Einfallsrichtung in Azimut und Elevation aus welcher die Bedrohung kommt, für mögliche Gegenmaßnahmen wichtig.

Nach dem allgemeinen Stand der Technik werden zur Beamrider Detektion großflächige Photodioden als Detektor verwendet, wobei in der Regel durch die Bauart der Photodioden und durch spezielle elektronische Beschaltung eine hohe Grenzfrequenz der Detektionsbandbreite angestrebt wird. Zur Abdeckung des erforderlichen Gesamdetektionswinkels werden in der Regel mehrere Detektionssektoren - üblicherweise Quadranten - mit jeweils einem Detektor überwacht.

Durch die Großflächigkeit wird hierbei die gesamte auf den Detektor einfallende Signalintensität erhöht. Durch die hohe Grenzfrequenz wird eine möglichst gute Separation des Pulssignals des Lenklasers vom Signal der Hintergrundhelligkeit angestrebt. Da mit der Fläche der Photodioden die Kapazität steigt und daraus folgend die Grenzfrequenz der Detektion sinkt, ist jedoch prinzipbedingt das erzielbare Signal-zu-Untergrund-Verhältnis eines solchen Detektors begrenzt.

Ein weiterer wesentlicher Nachteil dieser Lösung ist, dass keine genaue Richtungsdetektion möglich ist, da die Anzahl von Detektionssektoren zu Begrenzung des technischen Aufwandes klein gehalten wird. Weiterer Nachteil ist, dass die Unterdrückung des Hintergrundsignals nur begrenzt möglich ist, da prinzipbedingt das Hintergrundlicht über den gesamten Detektionssektor eines Detektors akkumuliert wird. Sofern sich die Sonne innerhalb dieses Sektors befindet, ist in der Regel eine Beamrider-Detektion hier kaum oder nur mit stark verringerter Empfindlichkeit möglich.

In einem aus der US 7,683,310 A bekannten Lösungsansatz wird vorgeschlagen, die Richtungsgenauigkeit durch Einsatz eines Arrays aus Detektoren zu erhöhen und gleichzeitig durch den Einsatz mehrere Detektorschichten mit Wellenlängenseparation eine zusätzliche Information zu gewinnen, sowie eine zusätzlich Unterdrückung des Untergrundlichtes zu erreichen. Nachteil ist hier der für eine hohe Winkelauflösung immens anwachsende Aufwand: So wäre für eine Winkelbestimmung auf 1° für einen Halbraum ein Array von ca. 27.000 dieser Detektorelemente erforderlich, jedes wiederum mit mehreren Photodiodenschichten und entsprechender Verstärkerelektronik.

Zur besseren Richtungsbestimmung werden in der US 5,280,167 A die Funktion der Richtungsbestimmung und die der Detektion getrennt. Zur Detektion wird wiederum eine großflächige, über jeweils einen Quadranten detektierende Photodiode eingesetzt. Mit dem von diesem Detektor empfangenen Pulsen wird dann in einer komplexen Logikschaltung (dem "Codebreaker") eine Vorhersage des nächsten eintreffenden Pulses generiert, mit welcher eine Bildverstärkerkamera getriggert wird. Im Bild dieser Bildverstärkerkamera kann dann die Laserbedrohung mit hoher Ortsauflösung sowie - bei korrekter Pulsvorhersage - geringem Untergrundsignal lokalisiert werden. Ein Nachteil dieser Anordnung ist, dass die Detektionsfähigkeit des Photodiodendetektors prinzipiell begrenzt ist, wie schon oben für die Lösung eines großflächigen Detektorelementes beschrieben. Ein weiterer Nachteil ist der hohe Aufwand: Neben dem komplexen Codebreaker wird eine mit einer Verschlusseinrichtung ("Gate") versehene Bildverstärkerkamera benötigt, welche drüber hinaus zur Erzielung hoher Ortsauflösungen nur einen kleinen Sehwinkel hat. Als Abhilfe wird in US 5,280,167 A vorgeschlagen, diese Bildverstärkerkamera auf einen Schwenk-Neigekopf zu setzen. Hierdurch wird wiederum der Aufwand erhöht und es entsteht ein Zeitverzug durch die notwendige Zeit zur Ausrichtung des Schwenk-Neigekopfes. Durch die notwendige Pulsvorhersage ist das Konzept außerdem auf die Detektion von entsprechend vorhersagbaren und in ihrer Charakteristik hierzu ausreichend bekannten Laserbedrohungen beschränkt.

US 6,137,566 beschreibt eine Vorrichtung zum Empfangen von Signalen von einem Photodetektor. Die Vorrichtung weist eine Anzahl von mit dem Photodetektor verbundenen Komparatoren auf. Jeder Komparator vergleicht den Ausgang des Photodetektors mit einem einstellbaren Schwellwert und jeder Schwellwert wird von einem Schwellregler gesteuert, wobei jeder Schwellenwert einem Helligkeitswert entspricht. Ausgänge der Komparatoren sind jeweils mit einem Schieberegister verbunden, wobei jedes Schieberegister ausgeführt ist, den Ausgang seines zugeordneten Komparators mit einer bestimmten Geschwindigkeit zu erfassen. Auf diese Weise wird einstellbare Intensitätsauflösung in gewünschten Bereichen der Helligkeitsintensität ermöglicht.

US 7,397,019 B1 beschreibt ein Lichterfassungsmodul für ein Luftfahrzeug. Das Lichterfassungsmodul beinhaltet ein optisches Element, welches einfallendes Licht zu einem Detektor leitet. Der Detektor weist Photodioden auf, welche ausgeführt sind, empfangenes Licht in elektrische Impulse umzuwandeln. Der Detektor ist mit einem Verstärker und einem Schwellwertschaltkreis gekoppelt, um einen erfassten Wert auszugeben. Die elektrischen Impulse werden verstärkt und dem Schwellwertschaltkreis zugeführt um zu ermitteln, ob die elektrischen Impulse einer bestimmten Signalpulsfolge entsprechen.

Der Erfindung liegt die Aufgabe zugrunde, ein Detektionsverfahren zu schaffen, welches eine hohe Empfindlichkeit zur Detektion von Beamrider-Lenklasern auch bei Tageslicht-Hintergrund aufweist, auch unbekannte, nicht vorhersagbare, gepulste Laserbedrohungen detektieren kann, gleichzeitig eine 2-dimensionale Richtungsauflösung der Einfallrichtung der Laserstrahlung von mindestens ca. 1° ermöglicht und eine sofortige Detektion ohne Zeitverzug wie z.B. durch mechanisch nachzuführende Detektoren erzielt.

Diese Aufgabe wird mit dem Verfahren nach Anspruch 1 gelöst. Vorteilhafte Ausführungen der Erfindung sind Gegenstände von Unteransprüchen.

Ein CCD-Sensor zur Verwendung in dem erfindungsgemäßen Verfahren ist Gegenstand von Patentanspruch 8.

Ein bildgebender Laserwarner zur Durchführung des erfindungsgemäßen Verfahrens ist Gegenstand des Anspruchs 9.

Die Erfindung wird anhand eines Ausführungsbeispiels unter Bezugnahme auf eine Fig. näher erläutert. Die Fig. zeigt eine Prinzipskizze zum Aufbau des Empfangsteils eines erfindungsgemäßen Laserwamers 20.

Zur Detektion und Richtungsbestimmung der einfallenden gepulsten Laserstrahlung 10 wird ein CCD-Sensor 1 mit einem Objektiv 2 hoher Lichtstärke, z.B. F1/1.4 in einem klassischen Kameraaufbau verwendet. Gegebenenfalls kann eine spektrale Filterung mit einem entsprechenden Interferenz- oder Farbfilter 3 erfolgen, um eine erste Reduktion der Hintergrundintensität zu erzielen. Um die hohe Momentanintensität des gepulsten Lasers vor dem starken Gleichlichthintergrund des z.B. sonnenbeleuchteten Hintergrundes zu detektieren, sind jedoch übliche CCD-Sensoren nicht geeignet.

Erfindungsgemäß wird ein spezieller CCD-Sensor mit einer ersten, im Folgenden auch "sensornah" genannte Signalverarbeitung verwendet, welcher mit einer hohen Abtastfrequenz jedes Pixel des CCD-Sensors mit einem Schwellwert vergleicht (im Folgenden auch "schnelle Abtastung" genannt).

Die sensornahe Signalverarbeitung kann dabei in einer besonders vorteilhaften Ausführung direkt in dem CCD-Sensor, d.h. direkt on-chip realisiert sein.

Die erfindungsgemäß verwendete Abtastfrequenz muss mindestens hoch genug sein, um eine Sättigung des CCD-Pixelkondensators innerhalb der Abtastperiode zu vermeiden. Hieraus ergibt sich bei Tageslichthintergrund eine Abtastfrequenz von mindestens ca. 5 kHz, das heißt mindestens alle 200 µs wird jedes Pixel des CCD-Sensors ausgelesen und mit einem Schwellwert verglichen.

Dass die erforderlichen hohen Abtastraten mit heutiger CCD-Technologie erzielbar sind, zeigt zum Beispiel die Kamera Fastcam IS-1M der Firma Photron, Inc, San Diego, CA (www.photron.com), welche eine Bildfrequenz von 1 MHz bei einer Auflösung von 312*260 Pixeln aufweist. Die Firma Princeton Scientific Instruments, Inc, New Jersey, USA (www.prinsci.com) bietet mit der Kamera PSI-3 eine CCD Kamera mit 5 MHz Bildfrequenz an. Dass auch noch kürzere Auslesezeiten bis zu 30 ns möglich sind wurde mit einem Prototyp des Fraunhofer IMS (Jahresbericht 2011, Fraunhofer IMS, Seite 47-49). demonstriert.

Hinsichtlich der praktischen Umsetzbarkeit des in der sensornahen Signalverarbeitung vorgesehenen pixelweise Schwellwertvergleichs direkt im CCD-Sensor wird auf das von M. Lehmann et al. demonstrierte "Smart Pixel" Konzept hingewiesen, bei welchem über einen solchen Schwellwertvergleich eine Belichtungssteuerung auf Einzelpixelbasis erfolgt (M. Lehmann et al. , "Smart pixels for Future 3D-TOF sensors, CSEM SA, Photonics Division, Paper ID R28).

Die zu detektierenden gepulsten Laser haben typischerweise eine Pulsdauer im Bereich von einigen 10ns. Daher steigt das resultierende Signal-zu-Hintergrundverhältnis bis zu einer Abtastfrequenz im Bereich von ca. 10 MHz mit der Höhe der Abtastfrequenz. Daher ist es vorteilhaft, die Abtastfrequenz möglichst hoch, vorzugsweise größer als 100 kHz zu wählen.

In der ersten, sensornahen Signalverarbeitung 4 wird nun nur bei Überschreiten des Schwellwertes der Inhalt des Pixels für eine weitere Verarbeitung verwendet. Ein solches, nach dem Schwellwertvergleich über sämtliche Bildpixel vorliegende Bild wird im Folgenden Einzelbild genannt.

Für eine erste Reduktion der Daten werden diese entsprechend der Abtastfrequenz erzeugten Einzelbilddaten über eine Anzahl von n Einzelbildern zu einem Signalbild aggregiert, wobei dies durch Mittelwertbildung oder durch Spitzenwertbestimmung erfolgen kann. Die Anzahl n wird hierbei in Abhängigkeit der gewählten hohen Abtastfrequenz so gewählt, dass eine mit üblicher Bildverarbeitungshardware prozessierbare Bildfrequenz der Signalbilder entsteht. Bei einer schnellen Abtastung mit 40 kHz führt z.B. n=200 zu einer Bildfrequenz der Signalbilder von 200 Hz. Erfolgt die schnelle Abtastung mit 200 kHz führt n=2000 zu einer Signalbildfrequenz von 100 Hz.

Die Signalbilder werden nun entsprechend den in der CCD-Kameratechnik üblichen Verfahren ausgelesen und dienen, über eine geeignete Schnittstelle ausgegeben (analoges Videosignal, Camera Link, GigE, USB, etc.), als Eingangssignal einer weiteren Signalverarbeitung 5. In dieser weiteren Signalverarbeitung werden dann in dem Signalbild die evtl. vorhandenen Signalpixel einer gepulsten Laserquelle identifiziert. Die Einfallsrichtung der Laserstrahlung ergibt sich dabei aus der Position der Signalpixel im Signalbild. Die Prozessierung der Bilddaten in der weiteren Bildverarbeitung 5 kann mit den in der Bildverarbeitungstechnik an sich bekannten Methoden erfolgen, z.B. mit weiterer Schwellwertbildung, geeigneter Rauschfilterung und evtl. zusätzlicher Signaturfilterung (Form, Größe, zeitliche Entwicklung der Signatur der Laserstrahlung im Signalbild).

Die Bildung eines Schwellwertes für den Schwellwertvergleich in der ersten Signalverarbeitung kann während des laufenden Überwachungsvorgangs des Laserwarners erfolgen, so dass eine automatische Adaption an die herrschenden Strahlungsverhältnisse möglich ist.

In einer vorteilhaften Ausführung werden zu diesem Zweck in der weiteren Signalverarbeitung der Signalbilder die bei der schnellen Abtastung zu verwendenden Schwellwerte so festgelegt, dass die Anzahl der nichtleeren Pixel im Signalbild eine vordefinierte Bandbreite nicht übersteigt. Wird diese Bandbreite unterschritten, werden die Schwellwerte für die Ermittlung des nächsten Signalbildes gesenkt, wird sie überschritten werden die Schwellwerte angehoben. Hierdurch wird einerseits erreicht, dass der Detektor immer an der Nachweisgrenze betrieben wird, andererseits wird sichergestellt, dass eine Sättigung des Signalbildes vermieden wird.

Im einfachsten Fall kann für den Schwellwertvergleich der schnellen Abtastung eine globale, für alle Pixel des Bildes gleiche Schwelle verwendet werden.

Besonders vorteilhaft ist es jedoch, hierfür ein Schwellwertbild zu verwenden, so dass entsprechend der Hintergrundhelligkeit der Szene lokal unterschiedliche Schwellwerte zum Einsatz kommen. Diese Schwellwertbild kann in der Bildverarbeitung der Signalbilder (also innerhalb der weiteren Signalverarbeitung) generiert werden, indem z.B. bei lokalen Häufungen von Signalpixeln nur für diesen Teil des Bildes die Schwelle angehoben wird.

Besonders vorteilhaft ist eine Ausführung, bei welcher dieses Schwellwertbild jeweils fortlaufend in der sensornahen Signalverarbeitung durchgeführt wird. Zur Generierung des Schwellwertbilds wird aus mindestens zwei, dem aktuellen Schwellwertvergleich zeitlich vorangehenden Einzelbildern pixelweise der Mittelwert gebildet, welchem ein zusätzlicher positiver Wert aufaddiert wird.

Hierdurch wird erreicht, dass Fehlsignale im Signalbild durch hohe, jedoch bezüglich der schnellen Abtastfrequenz sich nur langsam ändernde Hintergrundhelligkeiten effektiv vermieden werden. Wird zum Beispiel bei einer schnellen Abtastung mit 200 kHz ein über die jeweils 4 vorherigen Abtastungen gemitteltes Bild als Basis für das Schwellwertbild verwendet, so werden im Signalbild nur dann nichtleere Pixel vorhanden sein, wenn innerhalb der Abtastperiode von 5 µs eine signifikante - durch den zusätzlich aufaddierten Wert festgelegte - Änderung der Lichtintensität der Pixel vorlag. Sämtliche langsamer als 20 µs verlaufenden Änderungen werden durch die beschriebene Verwendung des Schwellwertbildes mit hoher Effektivität ausgefiltert. Da sich Intensitäten in natürlichen Szenenhintergründen, wie z.B. Sonnenspiegelungen im Wasser, in der Regel deutlich langsamer ändern, wird somit eine effektive Fehlsignalunterdrückung in der sensornahen Signalverarbeitung erreicht.

Durch die schnelle Abtastung der ersten, sensornahen Signalverarbeitung entstehen extrem hohe Datenraten. Daher ist es vorteilhaft, wie oben beschrieben, diese sensornahe Signalverarbeitung direkt in den CCD-Sensorchip zu integrieren. Dadurch müssen lediglich die mit den (für typische CCD-Kameras) üblichen Datenraten anfallenden Signalbilder aus dem CCD-Sensorchip ausgelesen werden.

Alternativ zu einer Implementierung der sensornahen Signalverarbeitung direkt auf dem CCD-Sensorchip kann die sensornahe Signalverarbeitung auch rein digital auf der Basis von verfügbarer FPGA-Technologie, z.B. von der Firma Xilinx, Inc, San Jose, CA in Verbindung mit einem schnellen Datenlink realisiert werden. In diesem Zusammenhang ist natürlich auch eine Nutzung mehrerer paralleler Datenlinks möglich.

Zusammengefasst nochmals die wesentlichen Vorteile der Erfindung:
- hohe Empfindlichkeit zur Detektion von Beamrider-Lenklasern auch bei Tageslicht-Hintergrund,
- auch unbekannte, nicht vorhersagbare, gepulste Laserbedrohungen können detektiert werden,
- 2-dimensionale Richtungsauflösung der Einfallrichtung der Laserstrahlung von mindestens ca. 1°,
- schnelle Detektion ohne Zeitverzüge wie sie sich z.B. durch mechanisch nachzuführende Detektoren ergeben.

Ein auf der Basis der vorliegenden Erfindung realisierter Laserwarner zeichnet sich insbesondere durch seine kompakte Bauform aus.

### Ausführungsbeispiel

In einem Ausführungsbeispiel wird ein CCD-Sensor mit 256 * 256 Pixel Auflösung und 50 µm Pixelraster verwendet (z.B. ein CMOS-CCD). Mit einem Objektiv von 8 mm Brennweite ergibt sich ein Öffnungswinkel von 92° vertikal und horizontal. Der Detektionswinkel pro Pixel beträgt 0.36°, womit sich die angestrebte Winkelauflösung von besser 1° gut erreichen lässt.

Bei einer Öffnung des Objektivs von 1/1.4 sammelt dieses bei einer einfallenden Pulsenergiedichte von 10 fJ/cm² ca. 10⁴ Photonen pro Puls bei einer im nahen Infrarot liegenden Laserwellenlänge. Diese können im ungünstigsten Fall - einer Fokussierung auf die Pixelecken - auf 4 Pixel verteilt werden, womit ca. 2500 Photonen auf ein Pixel entfallen, eine Größenordnung welche mit CCD Sensoren gut detektiert werden kann. Somit wird die angestrebte Detektionsempfindlichkeit erreicht.

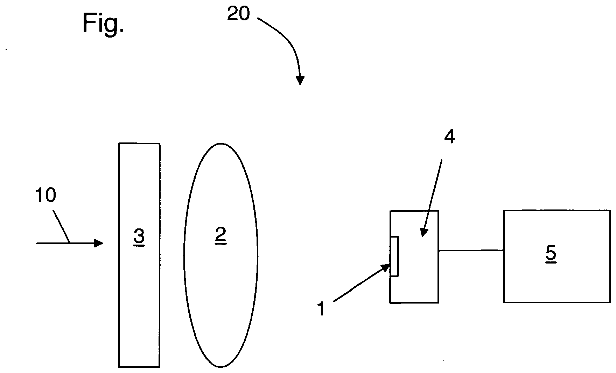

## Patentansprüche

1. Verfahren zur Detektion von gepulster Laserstrahlung (10) mit 2-dimensionaler Auflösung der Einfallsrichtung, **dadurch gekennzeichnet, dass**
- zur Detektion ein CCD-Sensor (1) mit einer abbildenden Optik (2) verwendet wird,
- in einer ersten Signalverarbeitung (4) mit einer Abtastfrequenz von mindestens 5 kHz Einzelbilder erzeugt werden, indem jedes Pixel des CCD-Sensors (1) mindestens alle 200 µs ausgelesen und mit einem Schwellwert verglichen wird und der Pixelwert nur bei Übertreffen des jeweiligen Schwellwerts für die weitere Prozessierung gespeichert wird,
- in der ersten Signalverarbeitung (4) der Mittelwert oder Spitzenwert aus diesen gespeicherten Pixelwerten eines Einzelbilds pixelweise über eine Anzahl von mindestens 10 Abtastungen ermittelt wird, wobei die Anzahl in Abhängigkeit der gewählten Abtastfrequenz gewählt wird, um eine Reduktion der Daten für eine Bildverarbeitungshardware zu erreichen,
- das so in der ersten Signalverarbeitung (4) erhaltene Signalbild mit einer Bildfrequenz von 10 Hz bis 500 Hz einer weiteren Signalverarbeitung
(5) bereitgestellt wird,
- in der weiteren Signalverarbeitung (5) aus dem Signalbild das bzw. die die einfallende Laserstrahlung repräsentierenden Signalpixel identifiziert werden, wobei sich die Einfallsrichtung der Laserstrahlung aus der Position der Signalpixel auf dem Signalbild ergibt.

2. Verfahren nach Anspruch 1, wobei der für den aktuellen Schwellwertvergleich innerhalb der ersten Signalverarbeitung (4) zu verwendende Schwellwert in der weiteren Signalverarbeitung (5) fortlaufend aus einem zeitlich vorhergehenden Signalbild abgeleitet wird, wobei -der Schwellwert jeweils erhöht bzw. abgesenkt wird, wenn im Signalbild eine festgelegte Spanne von nichtleeren Signalpixeln über- bzw. unterschritten wird.

3. Verfahren nach einem der vorangehenden Ansprüche, wobei für den Schwellwertvergleich in der ersten Signalverarbeitung (4) ein über das gesamte Bild konstanter Schwellwert verwendet wird.

4. Verfahren nach Anspruch 1, wobei für den Schwellwertvergleich in der ersten Signalverarbeitung (4) ein Schwellwertbild mit lokal unterschiedlichen Schwellwerten verwendet wird.

5. Verfahren nach Anspruch 4, wobei das Schwellwertbild fortlaufend in der weiteren Signalverarbeitung (5) gewonnen wird, in dem bei lokalen Häufungen von Signalpixeln im Signalbild nur für diesen Bildbereich der Schwellwert angehoben wird.

6. Verfahren nach Anspruch 4, wobei das Schwellwertbild fortlaufend in der ersten Signalverarbeitung (4) gewonnen wird, in dem aus mindestens zwei, dem aktuellen Schwellwertvergleich zeitlich vorangehenden Einzelbildern der Mittelwert gebildet und ein zusätzlicher positiver Wert aufaddiert wird.

7. Verfahren nach einem der vorangehenden Ansprüche, wobei die erste Signalverarbeitung (4) in dem CCD-Sensor (1) selbst erfolgt, und die Signalbilder aus dem CCD-Sensor (1) ausgelesen werden.

8. CCD-Sensor (1) zur Verwendung in dem Verfahren nach einem der vorangehenden Ansprüche, wobei in ihm die erste Signalverarbeitung (4) gemäß einem der vorangehenden Ansprüche implementiert ist.

9. Bildgebender Laserwarner (20) mit einem CCD-Sensor (1) und einer zugeordneten abbildenden Optik (2), wobei eine erste Signalverarbeitung (4) und eine weitere Signalverarbeitung (5) ausgeführt sind, ein Verfahren nach einem der Ansprüche 1 bis 7 durchzuführen.

## Claims

1. A method for detecting pulsed laser radiation (10) with two-dimensional resolution of the direction of incidence, **characterized in that**
- a CCD sensor (1) with imaging optics (2) is used for the detection,
- in a first signal processing (4) having a sampling frequency of at least 5 kHz, single images are generated by reading out each pixel of the CCD sensor (1) at least every 200 µs and comparing it to a threshold value, and storing the pixel value for further processing only if it exceeds the particular threshold value,
- in the first signal processing (4), the average value or peak value of these stored pixel values of a single image is determined pixel by pixel over at least 10 samples, wherein the number of samples is selected as a function of the selected sampling frequency in order to achieve a reduction in the data for image processing hardware,
- the signal image thus obtained in the first signal processing (4) is provided at an image frequency of 10 Hz to 500 Hz to further signal processing (5),
- in the further signal processing (5), signal pixel(s) representing the incident laser radiation is/are identified from the signal image, wherein the direction of incidence of the laser radiation results from the position of the signal pixels on the signal image.

2. The method according to Claim 1, wherein the threshold value to be used for the instantaneous threshold value comparison within the first signal processing (4) is continuously derived in the further signal processing (5) from a chronologically preceding signal, wherein the threshold value is respectively increased or decreased if a fixed span of non-empty signal pixels is exceeded or fallen short of in the signal image.

3. The method according to one of the preceding claims, wherein a threshold value that is constant over the entire image is used for the threshold value comparison in the first signal processing (4).

4. The method according to Claim 1, wherein a threshold value image having locally different threshold values is used for the threshold value comparison in the first signal processing (4).

5. The method according to Claim 4, wherein the threshold value image is continuously obtained in the further signal processing (5), in that in the event of local accumulations of signal pixels in the signal image, the threshold value is raised only for this image region.

6. The method according to Claim 4, wherein the threshold value image is continuously obtained in the first signal processing (4) in that the average value is formed from at least two single images chronologically preceding the instantaneous threshold value comparison, and an additional positive value is added thereto.

7. The method according to one of the preceding claims, wherein the first signal processing (4) takes place in the CCD sensor (1) itself, and the signal images are read out from the CCD sensor (1).

8. A CCD sensor (1) for use in the method according to one of the preceding claims, wherein the first signal processing (4) according to one of the preceding claims is implemented therein.

9. An imaging laser alerter (20) having a CCD sensor (1) and associated imaging optics (2), wherein a first signal processing (4) and a further signal processing (5) are executed to carry out a method according to one of Claims 1 to 7.

## Revendications

1. Procédé de détection d'un rayonnement laser pulsé (10) à résolution bidimensionnelle de la direction d'incidence, **caractérisé en ce que**
- pour la détection, un capteur CCD (1) avec une optique d'imagerie (2) est utilisé,
- dans un premier traitement de signal (4) avec une fréquence de balayage d'au moins 5 kHz, des trames sont générées **en ce que** chaque pixel du capteur CCD (1) est lu au moins toutes les 200 µm et comparé à une valeur de seuil et la valeur de pixel n'est mémorisée pour le traitement supplémentaire que si elle dépasse la valeur de seuil respective,
- dans le premier traitement de signal (4), la valeur moyenne ou la valeur maximale sont déterminées à partir de ces valeurs de pixel mémorisées d'une trame pour un nombre d'au moins 10 balayages, le nombre étant choisi en fonction de la fréquence de balayage retenue afin d'obtenir une réduction des données pour un équipement de traitement d'image,
- l'image de signal ainsi obtenue dans le premier traitement de signal (4) est fournie à un traitement de signal supplémentaire (5) avec une fréquence d'images de 10 Hz à 500 Hz,
- dans le traitement de signal supplémentaire (5), le(s) pixel(s) de signal représentant le rayonnement laser incident est/sont identifié(s) à partir de l'image de signal, la direction d'incidence du rayonnement laser résultant de la position des pixels de signal sur l'image de signal.

2. Procédé selon la revendication 1, dans lequel la valeur de seuil à utiliser pour la comparaison de valeurs de seuil actuelle dans le cadre du premier traitement de signal (4) est dérivée en continu à partir d'une image de signal antérieure dans le temps dans le traitement de signal supplémentaire (5), chaque valeur de seuil étant respectivement augmentée ou diminuée lorsqu'une marge fixée sur l'image de signal est dépassée ou soupassée par des pixels de signal non vides.

3. Procédé selon l'une quelconque des revendications précédentes, dans lequel une valeur de seuil constante pour l'image entière est utilisée pour la comparaison de valeurs de seuil dans le premier traitement de signal (4).

4. Procédé selon la revendication 1, dans lequel une image de valeur de seuil avec des valeurs de seuil localement différentes est utilisée pour la comparaison de valeurs de seuil dans le premier traitement de signal.

5. Procédé selon la revendication 4, dans lequel l'image de valeur de seuil est extraite en continu dans le traitement de signal supplémentaire (5) dans lequel, en cas d'accumulations locales de pixels de signal sur l'image de signal, la valeur de seuil n'est augmentée que pour cette zone d'image.

6. Procédé selon la revendication 4, dans lequel l'image de valeur de seuil est extraite en continu dans le premier traitement de signal (4) dans lequel la valeur moyenne est formée à partir d'au moins deux trames antérieures dans le temps à la comparaison de valeurs de seuil actuelle et une valeur positive supplémentaire est additionnée.

7. Procédé selon l'une quelconque des revendications précédentes, dans lequel le premier traitement de signal (4) est effectué dans le capteur CCD (1) lui-même et les images de signal sont lues à partir du capteur CCD (1).

8. Capteur CCD (1) à utiliser dans le procédé selon l'une quelconque des revendications précédentes, dans lequel le premier traitement de signal (4) selon l'une quelconque des revendications précédentes est mis en oeuvre dans celui-ci.

9. Avertisseur laser d'imagerie (20), comprenant un capteur CCD (1) et une optique d'imagerie (2) associée, dans lequel un premier traitement de signal (4) et un traitement de signal supplémentaire (5) sont effectués pour exécuter un procédé selon l'une quelconque des revendications 1 à 7.
